Europäisches Patentamt

European Patent Office

Office européen des brevets

(19)

(11) Publication number: **0 023 729**
**A1**

(12) **EUROPEAN PATENT APPLICATION**

(21) Application number: **80200497.8**

(22) Date of filing: **27.05.80**

(51) Int. Cl.³: **C 22 B 25/06**

(30) Priority: **07.08.79 BE 9484**
**18.02.80 BE 9730**

(43) Date of publication of application: **11.02.81**
**Bulletin 81/6**

(84) Designated Contracting States: **AT BE CH DE FR GB IT LI LU NL SE**

(71) Applicant: **INSTITUT DEQUALEX, INSTITUT POUR LA VALORISATION DES DECHETS DE QUALITES EXPLOITABLES, rue des Dominicains 18, B-7000 Mons (BE)**

(72) Inventor: **Dequenne, Jacques, rue Nicolas Lenoir 32, B-4442 Villers L'Eveque (BE)**
Inventor: **Duvigneaud, Paul, avenue J-P. Carsoel, 154, B-1180 Brussels (BE)**

(74) Representative: **Leherte, Georges et al, BUREAU VANDER HAEGHEN 63 avenue de la Toison d'Or, B-1060 Bruxelles (BE)**

(54) **Process for detinning tin coated scrap.**

(57) The invention relates to the recovery of tin from tin bearing material such as old cans, tin plate, lacquered tin sheet waste, and the like, i.e. in general tin plated or tin coated iron material.

The new process according to the invention comprises contacting the iron scrap with an aqueous or organic solution containing an effective amount of ferric ions.

EP 0 023 729 A1

ACTORUM AG

## PROCESS FOR DETINNING TIN COATED SCRAP

———————

This invention relates to the recovery of tin from tin bearing material such as old cans, tin plate, lacquered tin sheet waste, and the like, i.e. in general any tin plated or tin coated iron material, which for convenience will herein after be referred to as tin scrap.

Heretofore it was common practice to detin tin scrap by subjecting it to the treatment with aqueous alkaline solutions. Either an alkaline chemical process is applied by which tin is removed as stannate and then processed towards the production of tin, or an alkaline-electrolytic process is carried out to obtain metallic tin directly.

In the alkaline detinning process such as presently operated in industrial practice, (see for instance : B.D. Linley, Proceedings of the first international conference on tin 1976), an oxidizing agent is present and greatly increases the rate of dissolution of tin. A small percentage of oxidizer (nitrate, nitrite, ...) is added to a weak solution of sodium hydroxyde and this detinning agent is able to strip tin from electrolytic tin plate in $1\frac{1}{2}$ hours in dynamic conditions at temperatures exceeding 60°C. All such alkaline processes need to perform at rather high temperatures, generally between 60 and 105°C. Moreover, such processes have to be carried out for some hours, at room temperature, in order to obtain sufficient detinning of scrap.

Attempts to carry out detinning of scrap in acidic solutions gave rise to considerable problems which had to be avoided by adding iron dissolution inhibitors to the detinning solutions (see for instance U.S. patent 3,490,898).

It has now been found surprisingly that the drawbacks of known techniques may be avoided, and that a substantially complete detinning of iron scrap can be achieved in very short times, without external heating of the detinning medium, by using a very simple chemical process based upon oxido-reduction reactions, in which tin dissolves out preferentially.

In particular, the new process of detinning tin-plated and/or tin-coated iron scrap, according to the invention, mainly comprises contacting the iron scrap with an aqueous or organic solution containing an effective amount of ferric ions.

The aqueous and organic solutions of ferric ions may consist of any readily available iron salt solution, but most appropriately consist of iron chloride or iron sulfate solutions.

Organic solutions may consist of any conventional polar organic solvents such as ketons, esters and halogenated aliphatic or aromatic hydrocarbons.

According to an additional feature of the invention the atomic ratio of ferric ions present in the total amount of the detinning solution to the total amount of tin present in the iron scrap to be detinned is at least 4.

According to another and/or further feature of the invention, the ferric ion content of the detinning solution ranges from 0.01 M/liter to saturation, and is ideally comprised between 0.75 and 3.6 M/liter, which latter concentration corresponds to common commercially available solutions.

In a preferred embodiment of the invention ferrous ions resulting from the dissolution of tin and iron are regenerated to ferric ions, either by blowing air or oxygen into the detinning solution, or by electrolytic anodic oxidation, thus improving    the tin dissolution performance of the detinning solution.

In order to improve such regeneration of ferric ions from ferrous ions it may prove useful to add acid to the reaction mixture, for instance hydrochloric acid or sulfuric acid.

An important further feature of the invention lies in the fact that one may very suitably carry out the detinning operation without any external heating of the reaction medium, and thereby obtain substantially complete detinning, including tin alloys removal in very short times.

In another preferred embodiment of the invention, lacquer or varnish layers on the iron scrap have been previously removed, either by a heating operation or by means of organic solvent mixtures.

According to the invention, the solution resulting from the detinning operation may very suitably be used for electroplating of iron or for tin chloride or tin sulfate production.

Particularly interesting embodiments of the invention involve continuous detinning of iron scrap, by means of a solution which is continuously regenerated by reoxidation of ferrous ions and by removal of tin, and/or involve regeneration of the solution in an electrolytic cell,in which tin is deposited at the cathode and ferrous ions are reoxidized to ferric ions at the anode,said cathode and anode being separated by a porous membrane or diaphragm.

The new detinning process according to the invention :

- provides a simple and economical chemical process, based upon oxido-reduction reaction wherein tin dissolves out preferentially ;

- allows very effective detinning at approximately room temperature and in very short time ;

- allows regeneration of the chemical agent used for detinning, combined with tin recovery ;
- avoids the use of expensive alkaline agents,and perform with chemical by-products derivating from metallurgical activity ;

and involves the following advantages :

- chemical detinning of scrap in aqueous solutions containing $Fe^{+++}$ ions, coming from ferric chloride or ferric sulfate, is practically complete at room temperature in a few minutes at most ;
- use of $Fe^{+++}$ ions leads to more ready and complete detinning than would be expected by using more effective oxidizing agents such as perchlorate, permanganate, persulfate, etc...
- iron dissolution during the detinning process is not disadvantageous as it contributes to the production of more chemical detinning agent, which may meet unavoidable reagent losses;
- ferrous ions produced during detinning reaction can easily be reoxidized to the ferric state;
- the process can very easily be made continuous, for example by continuously supplying tin scrap by means of rotative perforated drums.

It has been found particularly suitable to use as detinning medium, a commercial aqueous solutions containing $Fe^{+++}$ ions, such as ferric chloride aqueous solutions containing 40% (in weight) of ferric chloride (3.6 M/liter).

Under these latter conditions, detinning of scrap is complete in a few minutes at ambient temperature, including stripping of tin-iron alloys present at the iron-tin interface of tin plated steel.

Tin recovery can most appropriately be achieved from the obtained solutions by an electrochemical process by which :

- in an electrolysis cell comprising cathodic and anodic compartments separated by a porous diaphragm (porous filter cloth, porous glass, ...) it is possible to recover tin onto the cathode and to reoxidize ferrous ions to ferric state in the anodic compartment ;

- tin can be recovered onto a cathode consisting of tin sheet or tin plated steel whereas in the anodic compartment, ferrous chloride can be reoxidized in ferric chloride onto an anode such as graphite anode ;

- the porous separator between the two compartments, avoids that produced ferric ions contact deposited tin again and redissolve it ;

- replenishing amounts of detinning agent are produced, owing to the fact that some iron coming from the tin plated steel is dissolved by ferric ions during detinning.

Thus the same detinning bath can be recirculated and increasing concentrations of tin in the bath can easily be reached.

Ferric chloride reoxidized at the anode of the electrolytic cell flows out of the cell by means of an overflow and can be recycled to the initial detinning bath.

The various features of the invention as well as further details thereof will be illustrated by means of the following comparative tests and examples.

TEST 1

Comparative test of the detinning performance of common oxidizing agents

In this test following oxidizing agents were used :

| Oxido-reducing couple | standard electrochemical power (Eo) |
|---|---|
| $Sn + Sn^{4+} \rightarrow 2 Sn^{2+}$ | $Eo = 0.14$ V |
| $Sn + 2 Cu^{++} \rightarrow Sn^{4+} + 2 Cu$ | $Eo = 0.34$ V |
| $Sn + 4 Fe^{3+} \rightarrow Sn^{4+} + 4 Fe^{2+}$ | $Eo = 0.77$ V |
| $Sn + 2 Hg^{++} \rightarrow Sn^{4+} + 2 Hg$ | $Eo = 0.85$ V |
| $3 Sn + 2Cr_2O_7^{=} + 28H^{+} \rightarrow 4Cr^{3+} + 3Sn^{4+} + 14H_2O$ | $Eo = 1.33$ V |
| $Sn + 2 HClO + 2 H^{+} \rightarrow Sn^{4+} + 2Cl^{-} + 2H_2O$ | $Eo = 1.49$ V |

$$5Sn+4MnO_4^- +32H^+ \rightarrow 5Sn^{4+}+4Mn^{2+}+16H_2O \qquad Eo = 1.51 \text{ V}$$
$$Sn + 2\ S_2O_8^= \longrightarrow Sn^{4+} + 4\ SO_4^= \qquad Eo = 2.0 \text{ V}$$

All runs have been made with samples of $E_1^-$ type (conventional definition) tin plated steel (5.6 g $Sn/m^2$), using $1dm^2$, sampled in small pieces of 9 $cm^2$ each, and immerged in 50 $cm^3$ of solution containing oxidizer in stoechiometric amount with respect to the tin present in the samples. Detinning reaction was studied as a function of time by weighing samples before and after immersion.

All tests were carried at 20 °C.

The results (expressed in % of loss of initial weigh)are shown in table 1.

# T A B L E   I

## Comparison of detinning performance of various oxidizers

| OXIDIZER | Eo (in volts) | MOLES OF OXIDIZER X $10^{-3}$ | TIME IN MINUTES | | | | | | | |
|---|---|---|---|---|---|---|---|---|---|---|
| | | | 1 | 3 | 5 | 10 | 20 | 30 | 60 | 120 |
| $Sn^{4+}$ | 0.14 | 9.42 | 0.01 | 0.01 | 0.01 | 0.01 | 0.01 | 0.01 | 0.01 | 0.02 |
| $Cu^{2+}$ | 0.34 | 18.84 | 0.02 | 0.03 | 0.04 | 0.14 | 0.17 | 0.19 | 0.33 | 0.41 |
| $Fe^{3+}$ | 0.77 | 37.68 | 0.15 | 0.20 | 0.22 | 0.31 | 0.35 | 0.44 | 0.56 | 0.60 |
| $Hg^{2+}$ | 0.85 | 18.84 | 0.13 | 0.15 | 0.16 | 0.21 | 0.21 | | | |
| $Cr_2O_7^{=}/H^+$ | 1.33 | 6.28 | 0.05 | 0.14 | 0.20 | 0.26 | 0.30 | 0.36 | 0.36 | 0.37 |
| $HClO/H^+$ | 1.49 | 18.84 | 0.03 | 0.06 | 0.06 | 0.06 | 0.12 | 0.12 | 0.27 | 0.45 |
| $MnO_4^{-}/H^+$ | 1.51 | 7.54 | 0.07 | 0.16 | 0.16 | 0.18 | 0.31 | 0.36 | 0.36 | 0.43 |
| $S_2O_8^{=}$ | 2.00 | 18.84 | 0.01 | 0.01 | 0.01 | 0.01 | 0.03 | 0.04 | 0.04 | 0.11 |

- 7 -

0023729

Table I clearly shows that ferric ions are the most efficient detinning agent, regardless of the oxidizing power of theoretically more powerful oxidizers.

It can be seen that the theoretical weight loss (0.33%) corresponding to the complete dissolution of tin is already reached in ten minutes with ferric ions ;

– These results clearly show the unexpected and very surprising influence of ferric ions upon detinning reaction.

## EXAMPLE 1

$0.16\ m^2$ of $E_{1-2}$-type tin plated steel was dipped in 1500 cm3 of an aqueous solution containing 40% (by weight) of ferric chloride at 18°C (pH = 0).

Weight loss as a function of time is stated in table 2 herebelow.

TABLE 2

| TIME IN MINUTES | 0.5 | 1 | 2 | 3 | 4 | 5 | 7 |
|---|---|---|---|---|---|---|---|
| Weight loss in % of initial weight | 0.34 | 0.41 | 1.20 | 1.45 | 1.61 | 1.80 | 2.19 |

Theoretical weight loss for tin dissolution (0.50%) is achieved in less than 2 minutes and no trace of tin or alloyed tin ($FeSn_2$) is visible by X-Ray diffraction examination.

## EXAMPLE 2

$1\ dm^2$ of $E_1$-type tin plated steel was dipped at 20°C in 50 cm$^3$ of aqueous solution containing ferric sulfate in such manner that the ratio of ferric ions to the total amount of tin in the samples equals 4. Weight loss as a function of time is stated in table 3 herebelow.

TABLE 3

| TIME IN MINUTES | 1 | 3 | 5 | 10 | 20 | 30 | 60 | 120 |
|---|---|---|---|---|---|---|---|---|
| Weight loss in % of initial weight | 0.03 | 0.09 | 0.11 | 0.15 | 0.22 | 0.26 | 0.30 | 0.39 |

## EXAMPLE 3

$E_1$-type tin plated samples (area = 1.5 dm$^2$) were immerged at 20°C in 300 cm$^3$ of aceton, containing 0.410 g of $FeCl_3.6H_2O$ and 3 cm$^3$ of hydrochloric acid.

Weight losses as a function of time are stated in table 4 herebelow.

### TABLE 4

| TIME IN HOURS | $\frac{1}{2}$ | 1 | 2 | 6 | 20 |
|---|---|---|---|---|---|
| Weight loss expressed in % of theoretical loss | 54.2 | 58.3 | 64.3 | 75.0 | 104.8 |

After 20 hours, no tin was visible anymore on detinned samples.

## EXAMPLE 4

1.5 dm$^2$ of different tin plated samples ($E_{1-1}$, $E_{2-2}$, $E_{3-3}$ and $E_{4-4}$-type) were dipped in 150 cm3 solution containing 20% (by weight) of $FeCl_3$.

Detinning reaction was measured through weight losses as a function of time. Results, expressed in % of weight loss, are given in table 5.

### TABLE 5

| TIME IN SECONDS | $E_{1-1}$ | $E_{2-2}$ | $E_{3-3}$ | $E_{4-4}$ |
|---|---|---|---|---|
| | Weight loss in % of initial weight | | | |
| 15 | 0.315 | 0.229 | 0.401 | 0.376 |
| 30 | .428 | .363 | .589 | .558 |
| 45 | .524 | .553 | .713 | .790 |
| 60 | .629 | .652 | 1.011 | 1.100 |
| 90 | .717 | .804 | 1.349 | 1.213 |
| 120 | .992 | 1.069 | 1.670 | 1.416 |
| 150 | – | – | – | 1.906 |
| 180 | – | – | – | 1.937 |
| Theoretical weight loss for tin | 0.33 | 0.66 | 0.99 | 1.32 |

These results show that detinning is complete in less than 2 minutes for each case.

## EXAMPLE 5

$1dm^2$ of $E_{1-1}$-type tin plated steel was dipped in 50 $cm^3$ solution containing 6.1 g/l of $FeCl_3$. Weight losses were measured as a function of time at 20°C.

On the other hand, 1 $dm^2$ of $E_{1-1}$ tin plated steel was dipped in 50 $cm^3$ solution containing 60g/l of NaOH. Weight losses were measured as a function of time at 20°C.

Results, expressed in % of weight losses are given in table 6.

## TABLE 6

| TIME IN MINUTES | $FeCl_3$ detinning solution | NaOH detinning solution |
|---|---|---|
| | weight loss in % of initial weight | |
| 1 | 0.085 | 0.011 |
| 3 | 0.142 | 0.035 |
| 5 | 0.171 | 0.039 |
| 10 | 0.276 | 0.040 |
| 20 | 0.325 | 0.041 |
| 30 | 0.379 | 0.042 |
| 60 | 0.394 | 0.049 |
| 120 | 0.450 | 0.050 |
| 240 | 0.510 | 0.051 |

Various changes and modifications to the disclosed features of the invention will be apparent to the skilled art worker without leaving the scope and spirit of the invention as set forth in the attached claims.

CLAIMS

1.- A process of detinning tin plated and/or tin-coated iron scrap which comprises contacting the iron scrap with an aqueous or organic solution containing an effective amount of ferric ions.

2.- Process according to claim 1 in which the atomic ratio of ferric ions present in the total amount of the detinning solution to the total amount of tin present in the iron scrap to be detinned is at least 4.

3.- Process according to claim 1 in which the ferric ion content of the detinning solution ranges from 0.01 M/liter to saturation.

4.- Process according to claim 3 in which the ferric ion content of the detinning solution ranges from about 0.75 to about 3.6 M/liter.

5.- Process according to anyone of the preceeding claims in which ferrous ions resulting from the dissolution of tin and iron are regenerated to ferric ions, either by blowing air or oxygen into the detinning solution, or by electrolytic anodic oxidation, thus improving the tin dissolution performance of the detinning solution.

6.- Process according to claim 5, in which acid is added to the reaction mixture to accelerate regeneration of ferric ions from ferrous ions.

7.- Process according to anyone of the preceeding claims in which complete detinning, including tin alloys removal is performed in very short times without external heating.

8.- Process according to anyone of the preceeding claims in which lacquer or varnish layers on the iron scrap have been previously removed, either by a heating operation or by means of organic solvent mixtures.

9.- Process according to anyone of the preceeding claims in which the solution resulting from the detinning operation is used for electroplating of iron.

10.- Process according to anyone of claims 1 to 9 in which the solution resulting from the detinning operation is used for tin chloride or tin sulfate production.

11.- Process according to anyone of the preceeding claims, in which there is performed a continuous detinning of continuously supplied tin coated iron scrap, by means of a detinning solution which is continuously regenerated by reoxidation of ferrous ions and by removal of tin.

12.- Process according to anyone of the preceeding claims, in which used detinning solution is led into an electrolytic cell, in which tin is deposited at the cathode and ferrous ions are reoxidized to ferric ions at the anode, said cathode and anode being separated by a porous membrane or diaphragm.

**European Patent Office**

**EUROPEAN SEARCH REPORT**

## DOCUMENTS CONSIDERED TO BE RELEVANT

| Category | Citation of document with indication, where appropriate, of relevant passages | Relevant to claim |
|---|---|---|
| | GB - A - 287 892 (L. UGHETTI LA CORSA)  * Whole patent * | 1-7,10-12 |
| | FR - A - 640 205 (L. UGHETTI LA CORSA)  * Whole patent * | 1-7,10-12 |
| | FR - A - 642 313 (L. UGHETTI LA CORSA)  * Whole patent * | 1-7,10-12 |
| | FR - A - 517 654 (A. FREY)  * Whole patent * | 1 |
| | US - A - 1 379 237 (M.A. ADAM)  * Claims * | 1,11 |
| | US - A - 2 208 138 (R.T. ROBINSON)  * Claims * | 1-7 |
| A | CHEMICAL ABSTRACTS, vol. 84, no. 14, 05-04-1976, page 209, abstract no. 84.93253g Columbus, Ohio, US  & JP - A - 75 28 426 (FURUKAWA ELECTRIC CO. LTD.) (24-03-1975) | |

, /

**CLASSIFICATION OF THE APPLICATION (Int. Cl.³)**

C 22 B 25/06

**TECHNICAL FIELDS SEARCHED (Int. Cl.³)**

C 22 B 25/06

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 14-11-1980 | JACOBS |

EPO Form 1503.1  06.78

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| A | FR - A - 548 369 (C. CLERC) | | |
| AD | US - A - 3 490 898 (N. VENKATA-KRISHNAN) | | |

**TECHNICAL FIELDS SEARCHED (Int. Cl. 3)**